# EUROPÄISCHE PATENTSCHRIFT

(11) **EP 2 845 288 B1**
(45) Veröffentlichungstag und Bekanntmachung des Hinweises auf die Patenterteilung: **04.05.2016**
(21) Anmeldenummer: 12733623.8
(22) Anmeldetag: 19.06.2012
(51) Int. Cl.: H02J 3/36

(54) **EIN- ODER AUSKOPPLUNG EINER LEISTUNG IN EINEM ABZWEIG EINES GLEICHSPANNUNGSNETZKNOTENS MIT EINER LÄNGSSPANNUNGSQUELLE**
ON- OR OFF-COUPLING OF POWER IN A BRANCH AT A NODE OF A DC NETWORK BY A VOLTAGE SOURCE CONNECTED IN SERIES
COUPLAGE OU DÉCOUPLAGE DE PUISSANCE DANS UNE DÉRIVATION À UN NOEUD DE UN RÉSEAU DC PAR UNE SOURCE DE TENSION CONNECTÉE EN SÉRIE

(43) Veröffentlichungstag der Anmeldung: 11.03.2015
(73) Patentinhaber: Siemens Aktiengesellschaft, 80333 München (DE)
(72) Erfinder: ECKEL, Hans-Günter, 18059 Rostock (DE)
(86) Internationale Anmeldenummer: PCT/EP2012/061737
(87) Internationale Veröffentlichungsnummer: WO 2013/189526

(56) Entgegenhaltungen:
- WO-A1-2010/115452

## Beschreibung

Ein- oder Auskopplung einer Leistung in einem Abzweig eines Gleichspannungsnetzknotens mit einer Längsspannungsquelle

Die Erfindung betrifft eine Vorrichtung zur Ein- oder Auskopplung einer Leistung in einem Abzweig eines Gleichspannungsnetzknotens mit einer Längsspannungsquelle, die Mittel zum Ein- oder Auskoppeln elektrischer Leistung aufweist.

In WO2010/115453A1 wird eine Spannungskompensation in DC-Übertragungsnetzen vorgeschlagen. Dort werden LängsSpannungsquellen in DC-Übertragungsleitungen eingefügt, um die Spannung in DC-Netzen an allen Punkten in einem zulässigen Bereich zu halten. Durch das Einfügen der LängsSpannungsquelle wird dem DC-System an dieser Stelle unvermeidbar Energie zu- oder abgeführt. Gemäß WO2010/115453 wird diese Energie einem vorhandenen Drehstromnetz entnommen oder mittels einer zusätzlichen Einrichtung aus der Gleichstromleitung selbst.

In der WO 2010/115452 A1 ist ein vermaschtes Gleichspannungsnetz beschrieben, in dem Steuerungseinrichtungen zur Lastflusssteuerung angeordnet sind. Die Lastflusssteuerung mittels der Steuerungseinrichtungen erfolgt dabei derart, dass die Steuerungseinrichtungen miteinander koordiniert werden. Der eingangs genannten Vorrichtung haftet der Nachteil an, dass diese die Möglichkeiten im Hinblick auf eine Energiefluss-Steuerung stark limitiert.

Aufgabe der Erfindung ist es daher, eine Vorrichtung der eingangs genannten Art bereitzustellen, die wirtschaftlich flexibel nutzbar zur Steuerung eines Lastflusses an einem Netzknoten eingesetzt werden kann.

Die Erfindung löst diese Aufgabe dadurch, dass die Mittel zum Ein- und Auskoppeln elektrischer Leistung über eine Niederspannungssammelschiene mit Mitteln zum Ein- und Auskoppeln elektrischer Leistung einer weiteren Vorrichtung zur Lastfluss-Steuerung gekoppelt sind, die in einem anderen Abzweig des gleichen Gleichspannungsnetzknotens angeordnet ist.

Durch die Kopplung mit mehreren Vorrichtungen zur Lastfluss-Steuerung insbesondere über den Gleichspannungsnetzknoten ist es möglich, flexibel eine Lastflusssteuerung zu erreichen, da die Mittel zum Ein- und Auskoppeln elektrischer Leistung es erlauben, die beispielsweise von einer Längsspannungsquelle abgegebene elektrische Leistung für beliebige Zwecke sinnvoll einzusetzen. Beispielsweise kann die Längsspannungsquelle zur Versorgung eines Verbrauchers oder zur Einspeisung elektrischer Energie von einer Quelle in den Gleichspannungsnetzknoten eingerichtet sein. Statt des Verbrauchers oder der Quelle kann auch ein Netz vorgesehen sein.

Bei dem Verbraucher kann es sich jedoch auch gleichzeitig um einen Energiespeicher, beispielsweise einem Hydroenergiespeicher, einen mechanischen Speicher, einen elektrischen oder chemischen Energiespeicher handeln. Im Bedarfsfall wird der Verbraucher dann zur Energiequelle. Der Verbraucher kann auch ein klassischer Energieverbraucher, beispielsweise eine Industrieanlage, eine Wohnansiedlung oder dergleichen sein.

Zur vollständigen Lastflusskontrolle kann die Anzahl der erfindungsgemäßen Vorrichtungen an einem Gleichspannungsnetzknoten um eins geringer sein als die Anzahl der Abzweige des besagten Netzknotens. Ist also n die Anzahl der Abzweige des Gleichspannungsnetzknotens berechnet sich die zur vollständigen Lastflusskontrolle notwendige Anzahl m der erfindungsgemäßen Vorrichtungen nach m = n-1.

Die erfindungsgemäße Vorrichtung ist zum Einsatz in einem Hochspannungsgleichstromnetz vorgesehen, wobei die Kopplung mehrerer Vorrichtungen über eine Niederspannungssammelschiene realisiert ist. Dies vermindert den Aufwand zum Leistungsaustausch beträchtlich.

Die Längsspannungsquelle kann mit einer für Wechselstrom ausgelegten Niederspannungssammelschiene verbunden sein. Niederspannung bedeutet hierbei eine Spannung von wenigen Kilovolt im Gegensatz zu den Betriebsspannungen des Abzweigs von einigen hundert Kilovolt.

Im Rahmen einer Ausgestaltung ist Längsspannungsquelle über eine Querstromquelle mit einem Nullpunkt (Erdpotenzial) verbindbar.

Insbesondere ist der Gleichspannungsknoten über die Querstromquelle mit dem Nullpunkt verbindbar.

Insbesondere kann die Vorrichtung eine solche Querstromquelle aufweisen, die zum Anschluss mit dem Nullpunkt eingerichtet ist. Alternativ kann die Vorrichtung zum Anschluss an die (z.B. eine Klemme oder einen Pol der) Querstromquelle eingerichtet sein.

Vorzugsweise ist die Querstromquelle mit dem Gleichspannungsnetzknoten verbindbar.

Die Querstromquelle stellt eine Option dar für den Fall, dass die Energiesumme der durch die Längsspannungsquellen entnommenen und eingespeisten Energien ungleich Null ist.

Eine Weiterbildung ist es, dass die Längsspannungsquelle über eine Querstromquelle oder direkt mit einem Wechselstromnetz (z.B. über einen Transformator) gekoppelt ist.

Eine andere Weiterbildung besteht darin, dass die Längsspannungsquelle mindestens einen Umrichter aufweist. Für die Hochspannungsgleichstromübertragung (HGÜ) werden sogenannte modulare Multilevel-Umrichter (MMC: "Modular Multilevel Converter") eingesetzt, deren Grundbaustein z.B. eine Halbbrücke aus IGBT und Dioden ist. Dieser Grundbaustein wird auch als Submodul (auch: Konvertermodul) bezeichnet. Es ist bekannt, eine Vielzahl solcher Submodule in Reihe zu schalten, um eine Hochspannungsfestigkeit zu erreichen.

Eine zusätzliche Weiterbildung besteht darin, dass die Längsspannungsquelle mindestens ein Phasenmodul mit mindestens zwei in Reihe geschalteten Phasenmodulzweigen aufweist, wobei ein Mittenabgriff zwischen den Phasenmodulzweigen mit einem Wechselspannungsanschluss, insbesondere mit einem Transformator, verbindbar ist.

Insbesondere können mehrere Phasenmodule parallel geschaltet sein und so einen mehrphasigen Umrichter realisieren.

Auch ist es eine Ausgestaltung, dass die Längsspannungsquelle in Reihe mit einem mechanischen Schalter geschaltet ist und parallel zu der Längsspannungsquelle und dem mechanischen Schalter eine Leistungsschalteinheit angeordnet ist.

Die Längsspannungsquelle kann beispielhaft wie folgt eingesetzt werden. So dient sie zum einen als Kommutierungsspannung, wenn beispielsweise Kurzschlussströme unterbrochen werden sollen. Zunächst wird ein hoher Stromanstieg und/oder ein zu hoher Strom über eine bestimmte Zeitdauer hinweg detektiert. Anschließend wird ein Auslösesignal an eine Auslöseeinheit des mechanischen Schalters im Dauerstrompfad gesandt. Gleichzeitig werden die Leistungshalbleiterschalter der Leistungshalbleitereinheit im Schaltpfad eingeschaltet. Schließlich wird eine Gegenspannung erzeugt, die in der aus Dauerstrompfad und Schaltstrompfad gebildeten Masche einen Kreisstrom erzeugt, der dem zu schaltenden Kurzschlussstrom im Dauerstrompfad entgegengesetzt ist. Die Längsspannungsquelle erzeugt beispielsweise aktiv eine Gegenspannung. Abweichend hiervon ist die Längsspannungsquelle, wie in der eingangs genannten Druckschrift, als elektronischer Hilfsschalter realisiert. Als elektronischer Hilfsschalter eignet sich z.B. ein IGBT oder IGCT mit gegensinnig paralleler Freilaufdiode. Selbstverständlich können auch mehrere in Reihe geschaltete elektronische Hilfsschalter eingesetzt werden, die antiseriell angeordnet sind. Das Abschalten des Hilfsschalters kann dem Anlegen einer Gegenspannung, die dem Stromfluss im Dauerstrompfad entgegenwirkt, gleichgesetzt werden. Mittels der Längsspannungsquelle wird der Strom in den Abschaltzweig kommutiert, so dass der mechanische Schalter stromlos geöffnet werden. Das eigentliche Unterbrechen des Kurzschlussstromes erfolgt in der Leistungsschalteinheit.

Die Längsspannungsquelle kann im Rahmen der Erfindung grundsätzlich beliebig ausgebildet sein. Besondere Vorteile werden jedoch darin gesehen, dass die Längsspannungsquelle wenigstens ein Submodul aufweist, das mit einem Energiespeicher und einer Leistungshalbleiterschaltung ausgerüstet ist, wobei jedes Submodul über Mittel zum Ein- und Auskoppeln elektrischer Leistung verfügt. Sind mehrere Submodule dieser Art vorgesehen, so sind diese Submodule in Reihe miteinander geschaltet.

Vorteilhafterweise verfügt jedes Submodul über eine Halbbrückenschaltung. Solche Halbbrückenschaltungen sind mit einer Leistungshalbleiterschaltung ausgerüstet, die aus einer Reihenschaltung zweier Leistungshalbleiterschalter besteht, wobei die Reihenschaltung einem Energiespeicher, beispielsweise einem unipolaren Speicherkondensator, parallel geschaltet ist. Der Potenzialpunkt zwischen den beiden Leistungshalbleiterschaltern der Reihenschaltung ist mit einer ersten Anschlussklemme verbunden, wobei ein Pol des Energiespeichers mit einer zweiten Anschlussklemme des Submoduls verbunden ist.

Den Leistungshalbleiterschaltern ist im Bedarfsfall eine gegensinnige Freilaufdiode parallel geschaltet. Als Leistungshalbleiterschalter kommen beispielsweise IGBTs oder IGCTs in Betracht. Durch die Halbbrückenschaltung ist an den Anschlussklemmen eines jeden Submoduls entweder die an dem Energiespeicher abfallende Energiespeicherspannung U_{c} oder aber eine Nullspannung erzeugbar. Gemäß dieser vorteilhaften Weiterentwicklung kann die Längsspannungsquelle daher aktiv eine Gegenspannung in nur einer Richtung erzeugen. So eignen sich Halbbrückenschaltungen insbesondere dann, wenn die Richtung der einzuprägenden Gegenspannung bekannt ist.

Um eine Spannung jedoch in beiden Richtungen aufbauen zu können, sind Submodule vorteilhaft, die über eine Vollbrückenschaltung verfügen. Auch diese Submodule werden in Reihe geschaltet, so dass die Längsspannungsquelle aus einer Reihenschaltung von Submodulen besteht. Die eine Vollbrückenschaltung aufweisenden Submodule sind jeweils zwei Reihenschaltungen aus zwei Leistungshalbleiterschaltern ausgerüstet, wobei der Potenzialpunkt zwischen den beiden in Reihe geschalteten Leistungshalbleiterschaltern der ersten Reihenschaltung mit der ersten Anschlussklemme und der Potenzialpunkt zwischen den beiden Leistungshalbleiterschaltern der zweiten Reihenschaltung mit der zweiten Anschlussklemme verbunden ist. Beide Reihenschaltungen sind einem Energiespeicher parallel geschaltet. Insgesamt weist die Vollbrückenschaltung also vier Leistungshalbleiterschalter auf. Jedem dieser Leistungshalbleiterschalter ist im Bedarfsfall wieder eine Freilaufdiode gegensinnig parallel geschaltet. Aufgrund dieser Schaltungsanordnung ist an den Anschlussklemmen eines jeden Submoduls entweder die an dem Energiespeicher abfallende Energiespeicherspannung U_{c}, eine Nullspannung oder aber die inverse Energiespeicherspannung -U_{c} erzeugbar. Somit können mit einer Reihenschaltung solcher Vollbrückensubmodule Gegenspannungen in beiden Richtungen aufgebaut werden, wobei die maximale Gegenspannung von der Anzahl der Submodule abhängig ist. Durch Einsatz einer Pulsweitenmodulation bei der Ansteuerung der Leistungshalbleiterschalter kann die Gegenspannung quasi kontinuierlich zwischen der maximalen positiven und der maximalen inversen Energiespeicherspannung variiert werden.

Zweckmäßigerweise ist durch die Mittel zum Ein- und Auskoppeln elektrischer Leistung eine Wechselspannung im Niederspannungsbereich erzeugbar. Die Wechselspannung hat den Vorteil, dass diese einfach beispielsweise induktiv und kostengünstig mit anderen Wechselspannung erzeugenden Mitteln zum Ein- und Auskoppeln elektrischer Leistung gekoppelt werden kann.

Gemäß einer diesbezüglich zweckmäßigen Weiterentwicklung weisen die Mittel zum Ein- und Auskoppeln elektrischer Leistung wenigstens eine dem Energiespeicher parallel geschaltete Reihenschaltung aus zwei ein- und abschaltbaren Leistungshalbleiterschaltern und eine Spule auf. Die Spule ist mit einer ihrer Klemmen mit dem Potentialpunkt zwischen den Leistungshalbleiterschaltern der besagten Reihenschaltung verbunden. Gemäß einer diesbezüglichen Weiterentwicklung, kommt neben einer Spule noch wenigstens ein Kondensator zum Einsatz. Auch können zwei Reihenschaltungen nach Gestalt einer hartgeschalteten Vollbrücke eingesetzt werden, wobei die Potenzialpunkte zwischen den beiden Leistungshalbleiterschaltern der beiden Reihenschaltungen mit unterschiedlichen Klemmen der Spule verbunden sind.

Zweckmäßigerweise ist die Spule induktiv mit einer Spule einer Längsspannungsquelle einer weiteren erfindungsgemäßen Vorrichtung gekoppelt, die in einem anderen Abzweig des Gleichspannungsnetzknotens angeordnet ist. Diese induktive Kopplung erfolgt beispielsweise über Einzeltransformatoren. Die Einzeltransformatoren weisen Sekundärwicklungen auf, die mit der Niederspannungssammelschiene verbunden sind. Auch ist es möglich, alle Spulen auf einem gemeinsamen Transformator anzuordnen.

Die Erfindung betrifft ebenfalls einen Netzspannungsknoten (Gleichspannungsnetzknoten) mit Abzweigen, wobei in wenigstens zwei Abzweigen eine Vorrichtung gemäß der vorliegenden Erfindung angeordnet ist.

Erfindungsgemäß sind die Mittel zum Ein- und Auskoppeln elektrischer Leistung der wenigstens zwei Vorrichtungen über eine Niederspannungssammelschiene miteinander gekoppelt. Die Niederspannungssammelschiene ist beispielsweise für Wechselspannungen ausgelegt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: einen Gleichspannungsnetzknoten mit einer Reihe von Abzweigen zeigt, in denen jeweils ein Ausführungsbeispiel der erfindungsgemäßen Vorrichtung schematisch dargestellt ist,
- Figur 2: eine beispielhafte Ausführung der erfindungsgemäßen Vorrichtung in Verbindung mit einer Unterbrechungsschaltung verdeutlicht,
- Figur 3: ein Ausführungsbeispiel einer Längsspannungsquelle der Vorrichtung verdeutlicht,
- Figur 4: ein Submodul einer Längsspannungsquelle einschließlich der Mittel zum Ein- und Auskoppeln elektrischer Leistung verdeutlicht,
- Figur 5: basierend auf Figur 1 ein bipolares Gleichspannungsübertragungsnetz mit erfindungsgemäßen Vorrichtungen sowie zwei optionalen Querstromquellen verdeutlicht,
- Figuren 6 - 11: jeweils ein Ausführungsbeispiel der Mittel zum Ein- und Auskoppeln elektrischer Leistung schematisch verdeutlichen,
- Figuren 12 - 14: Ausführungsbeispiele von Transformatoren zum Koppeln der Wechselspannungen verdeutlichen, welche durch die Mittel zum Ein- und Auskoppeln elektrischer Leistung erzeugbar sind,
- Figur 15: basierend auf Figur 1 eine beispielhafte Realisierung der erfindungsgemäßen Vorrichtung mit einer optionalen Querstromquelle durch Umrichter verdeutlicht,
- Figur 16: eine beispielhafte Realisierung einer Anordnung verdeutlicht, die als Längsspannungsquelle oder als Querstromquelle einsetzbar ist,
- Figur 17: ein Submodul als eine Halbbrückenschaltung verdeutlicht,
- Figur 18: ein Submodul als eine Vollbrückenschaltung verdeutlicht,
- Figur 19: eine beispielhafte Realisierung mit zwei Längsspannungsquellen und einer Querstromquelle verdeutlicht, die über die Sammelschiene miteinander gekoppelt sind.

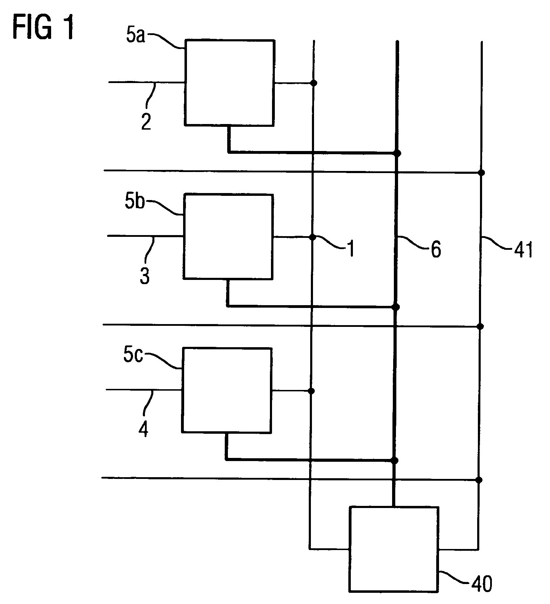

Figur 1 zeigt ein Ausführungsbeispiel eines erfindungsgemäßen Gleichspannungsnetzknotens 1, der eine Reihe von Abzweigen 2, 3, 4 aufweist, in denen jeweils ein Ausführungsbeispiel der erfindungsgemäßen Vorrichtung 5 angeordnet ist. Jede Vorrichtung 5 weist eine Längsspannungsquelle mit Mitteln zum Ein- und Auskoppeln elektrischer Leistung auf, wobei die Mittel zum Ein- und Auskoppeln elektrischer Leistung über eine Niederspannungssammelschiene 6 miteinander verbunden sind. Auf diese Art ist z.B. ein Leistungsaustausch zwischen den Vorrichtungen 5a, 5b und 5c ermöglicht. Optional ist eine Querstromquelle 40 vorgesehen, die mit dem Gleichspannungsnetzknoten 1 und der Niederspannungssammelschiene 6 verbunden sein kann. Weiterhin kann ein Nullpunkt 41 (Erdpotenzial) vorgesehen sein, der mit den Vorrichtungen 5a, 5b und 5c sowie der Querstromquelle 40 verbunden ist.

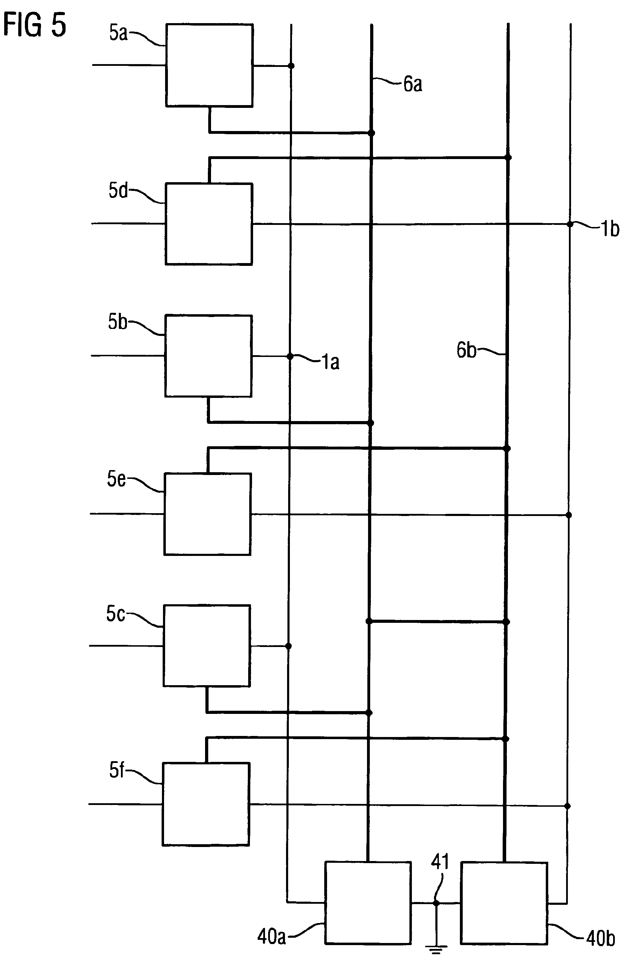

Figur 5 zeigt basierend auf der Darstellung von Figur 1 den Fall eines bipolaren Gleichspannungsübertragungsnetzes umfassend einen positiven Sternpunkt 1a und einen negativen Sternpunkt 1b sowie einer Sammelschiene 6a für Vorrichtungen 5a bis 5c und einer Sammelschiene 6b für Vorrichtungen 5d bis 5e.

Optional können zwei Querstromquellen 40a und 40b vorgesehen sein, die über den Nullpunkt 41 gekoppelt sind. Die Querstromquelle 40a ist mit dem positiven Sternpunkt 1a und mit der Sammelschiene 6a und die Querstromquelle 40b ist mit dem negativen Sternpunkt 1b und der Sammelschiene 6b verbunden.

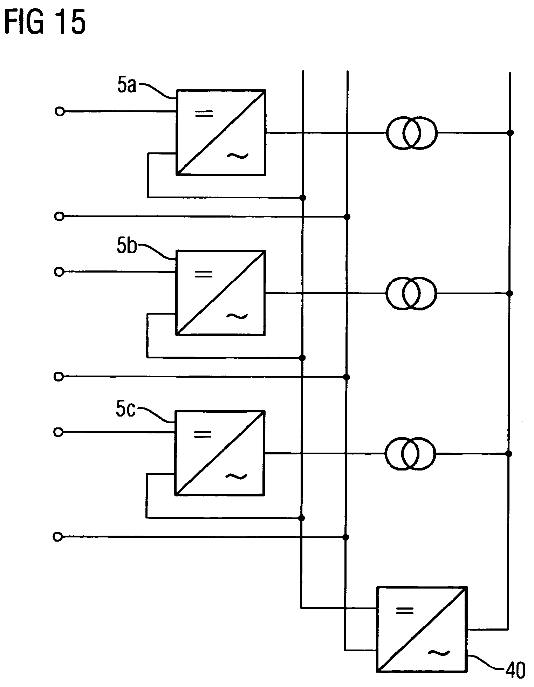

Figur 15 zeigt ein auf Figur 1 basierendes Ausführungsbeispiel, wobei die Vorrichtungen 5a bis 5c sowie die Querstromquelle 40 jeweils als ein Umrichter ausgeführt sind. Die Wechselstromanschlüsse der Vorrichtungen 5a bis 5c sind über einen Transformator mit dem Wechselstromanschluss der Querstromquelle 40 gekoppelt.

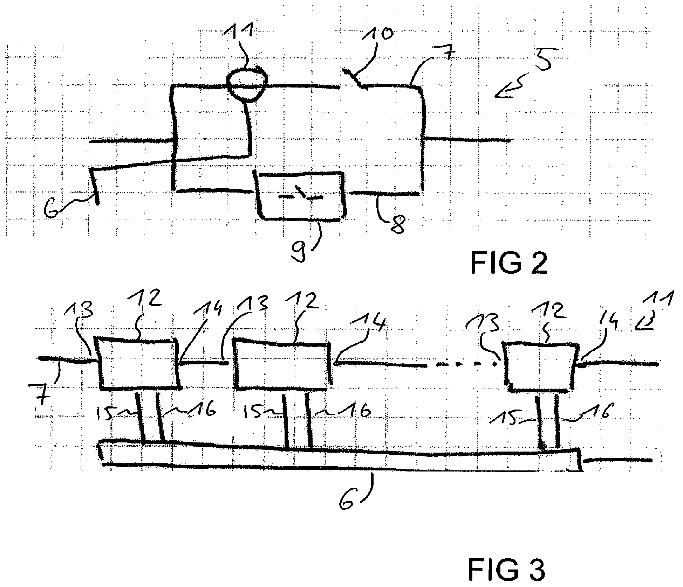

Figur 2 zeigt eine beispielhafte Ausführung der erfindungsgemäßen Vorrichtung in Verbindung mit einer Unterbrechungsschaltung. Gemäß diesem Beispiel umfasst die Vorrichtung 5 exemplarisch einen Dauerstrompfad 7 sowie einen Abschaltstrompfad 8, in dem eine Leistungsschalteinheit 9 angeordnet ist. Die Leistungsschalteinheit 9 ist zum Unterbrechen hoher Kurzschlussströme, die von Hochspannungen bis zu 500 kV getrieben sind, eingerichtet. Solche Leistungsschalteinheiten sind dem Fachmann bekannt, so dass an dieser Stelle nicht ausführlich auf deren Ausgestaltung eingegangen wird. Sie weisen beispielsweise eine Reihenschaltung von Leistungshalbleiterschaltern, IGBTs, IGCTs GTOs oder dergleichen auf, denen jeweils eine Freilaufdiode gegensinnig parallel geschaltet ist. Dabei sind die Leistungshalbleiterschalter und somit die ihnen zugeordneten Freilaufdioden nicht alle in die gleiche Stromrichtung orientiert. Vielmehr ermöglicht eine antiserielle Anordnung der Leistungshalbleiterschalter Ströme in beiden Richtungen zu schalten. Zum Abbau der beim Schalten frei werdenden Energie dienen Ableiter in Parallelschaltung zu den Leistungshalbleiterschaltern.

Im Dauerstrompfad 7 ist ein schneller mechanischer Schalter 10 angeordnet, der bei Normalbetrieb geschlossen ist. Ferner ist eine Längsspannungsquelle 11 schematisch verdeutlicht und die Niederspannungssammelschiene 6 zum Koppeln der Vorrichtungen 5a, 5b und 5c. Wie bereits erläutert wurde, erzeugt die Längsspannungsquelle in der aus Dauerstrompfad 7 und Abschaltpfad 8 bestehenden Masche aktiv eine Gegenspannung. Die Gegenspannung sorgt für einen Kreisstrom in der Masche, der dem Betriebsgleichstrom im Dauerstrompfad entgegengesetzt ist. Der resultierende Strom im Dauerstrompfad kann somit begrenzt oder vollständig unterdrückt werden.

Figur 3 zeigt ein Ausführungsbeispiel der in der Vorrichtung enthaltenen Längsspannungsquelle 11, die dort beispielhaft aus einer Reihenschaltung von Submodulen 12 besteht. Die Submodule 12 weisen jeweils eine erste Anschlussklemme 13 sowie eine zweite Anschlussklemme 14 auf. Dabei sind die Anschlussklemmen 13 und 14 im Dauerstrompfad 7 angeordnet, wo sie bei Normalbetrieb einen Gleichstrom führen. Jedes Submodul weist ferner eine erste Wechselspannungsanschlussklemme 15 sowie eine zweite Wechselspannungsanschlussklemme 16 auf. Die beiden Wechselspannungsanschlussklemmen 15 und 16 sind jeweils mit der Niederspannungssammelschiene 6 verbunden. Hierbei können beispielsweise Induktivitäten, Transformatoren oder dergleichen zum Einsatz gelangen, worauf später noch eingegangen wird.

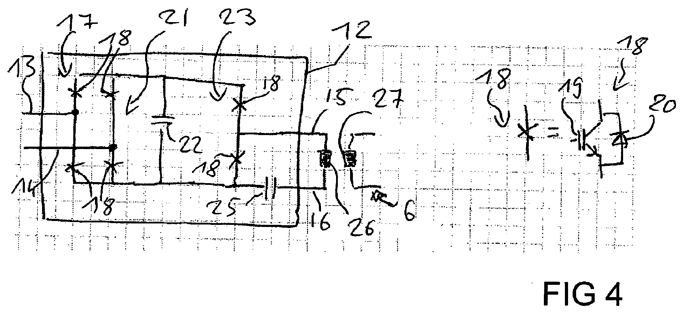

Figur 4 zeigt ein Ausführungsbeispiel eines Submoduls 12, wobei das in Figur 4 dargestellte Submodul beispielhaft eine Vollbrückenschaltung aufweist. Mit anderen Worten weist das Submodul 12 eine erste Reihenschaltung aus zwei Leistungshalbleiterschalteinheiten 18 auf. Jede Leistungshalbleiterschalteinheit 18 besteht aus einem IGBT 19 als Leistungshalbleiterschalter sowie aus einer gegensinnig parallel dazu geschaltete Freilaufdiode 20. Ferner ist eine zweite Reihenschaltung 21 erkennbar, die ebenfalls aus zwei Leistungshalbleiterschalteinheiten 18 gebildet ist. Die erste Reihenschaltung 17 und die zweite Reihenschaltung 21 sind jeweils einem Energiespeicher 22, der als Speicherkondensator ausgebildet ist, parallel geschaltet. Der Potenzialpunkt zwischen den Leistungshalbleiterschalteinheiten 18 der ersten Reihenschaltung 17 ist mit der ersten Anschlussklemme 13 und der Potenzialpunkt zwischen den Leistungshalbleiterschalteinheiten 18 der zweiten Reihenschaltung 21 mit der zweiten Anschlussklemme 14 des Submoduls 12 verbunden. Ferner sind Mittel zum Ein- und Auskoppeln elektrischer Leistung 23 vorgesehen, die eine Reihenschaltung 24 aus zwei Leistungshalbleiterschalteinheiten 18 aufweist, wobei der Potenzialpunkt zwischen den Leistungshalbleiterschalteinheiten 18 der Reihenschaltung 24 mit der ersten Wechselspannungsanschlussklemme 15 verbunden ist. Die zweite Wechselspannungsanschlussklemme 16 ist über einen Kondensator 25 an dem Pol des Energiespeichers 22 angeschlossen. Ferner weisen die Mittel zum Ein- und Auskoppeln elektrischer Leistung 23 eine Induktivität 26 auf, die mit einer Induktivität 27 der Niederspannungssammelschiene 6 gekoppelt ist. Die Induktivität oder Spule 26 muss aufgrund einer fehlenden Erdung nicht für Hochspannungen im Bereich von 500 kV ausgelegt werden. Aufgrund ihres Anschlusses an einem der Pole des Energiespeichers, also an dem Zwischenkreis, unter Zwischenschaltung eines Kondensators liegen die mit ihr erzeugbaren Wechselspannungen im Niederspannungsbereich.

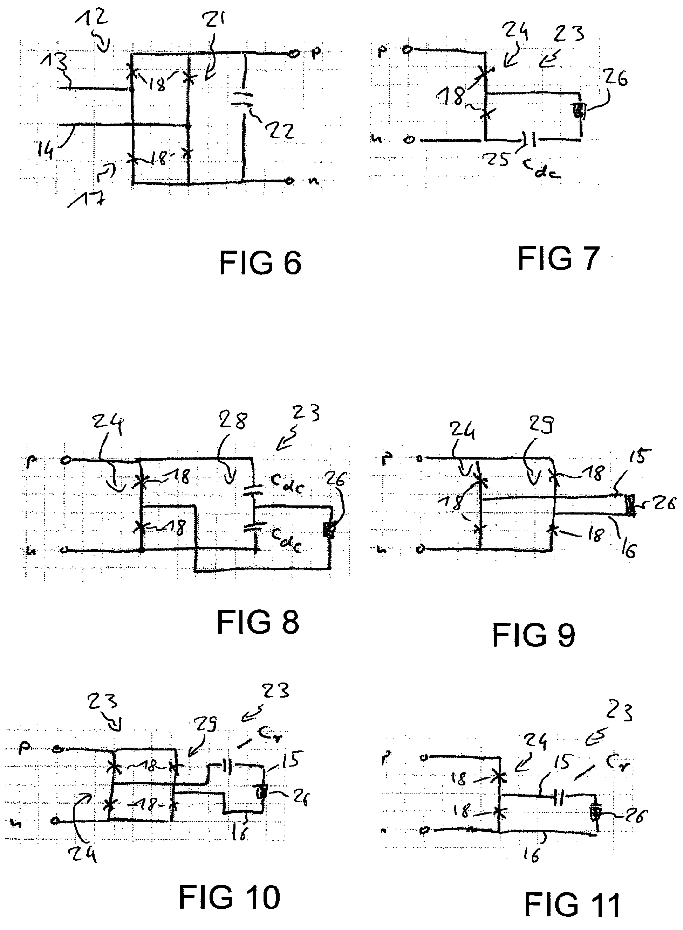

Figur 6 zeigt noch einmal ein Submodul 12 mit Vollbrücke, auf das bereits im Zusammenhang mit Figur 4 eingegangen wurde. In Figur 6 ist das Submodul 12 jedoch ohne Mittel zum Ein- und Auskoppeln elektrischer Leistung gezeigt. Stattdessen sind gleichspannungsseitige Anschlusspunkte P und N zum Anschluss der Mittel 23 zum Ein- und Auskoppeln elektrischer Leistung verdeutlicht.

In den Figuren 7, 8, 9, 10 und 11 sind unterschiedliche Ausgestaltungen der Mittel zum Ein- und Auskoppeln elektrischer Leistung 23 gezeigt.

Figur 7 zeigt ein erstes Ausführungsbeispiel der Mittel zum Ein- und Auskoppeln elektrischer Leistung 23, das bereits im Zusammenhang mit Figur 4 erläutert wurde.

Figur 8 zeigt ein weiteres Ausführungsbeispiel der Mittel zum Ein- und Auskoppeln elektrischer Leistung 23, die dem Beispiel gemäß Figur 7 entsprechend als Halbbrücke ausgestaltet sind und eine Reihenschaltung 24 aus zwei Leistungshalbleiterschalteinheiten 18 aufweisen, wobei der Reihenschaltung 24 eine Reihenschaltung aus zwei Kondensatoren C_{DC} parallel geschaltet ist. Der Potenzialpunkt zwischen den beiden Kondensatoren ist mit der ersten Klemme der Spule 26 verbunden, wobei die andere Klemme der Spule 26 mit dem Potenzialpunkt zwischen den Leistungshalbleiterschalteinheiten 18 der Reihenschaltung 24 verbunden ist. Wie die in Figur 7 dargestellte Ausgestaltung der Mittel zum Ein- und Auskoppeln elektrischer Leistung handelt es sich bei dem Ausführungsbeispiel gemäß Figur 8 um eine hart schaltende Halbbrücke. Im Vergleich zu Figur 7 ist jedoch der Zwischenkreis durch die Kondensatoren C_{DC} als Spannungsteiler realisiert.

Figur 9 zeigt ein weiteres Ausführungsbeispiel der Mittel zum Ein- und Auskoppeln elektrischer Leistung 23, die neben einer ersten Reihenschaltung aus zwei Leistungshalbleiterschalteinheiten eine zweite Reihenschaltung 29 aus zwei Leistungshalbleiterschalteinheiten 18 aufweist. Der Potenzialpunkt zwischen den Leistungshalbleiterschalteinheiten 18 der ersten Reihenschaltung 24 ist über die erste Wechselspannungsanschlussklemme 15 mit einer ersten Klemme der Spule 26 verbunden, während der Potenzialpunkt zwischen den Leistungshalbleiterschalteinheiten 18 der zweiten Reihenschaltung 29 über die zweite Wechselspannungsanschlussklemme 16 mit der anderen Klemme der Spule 26 verbunden ist. Die Schaltung gemäß Figur 9 kann als hart geschaltete Vollbrücke bezeichnet werden.

Das Ausführungsbeispiel gemäß Figur 10 entspricht weitestgehend dem Ausführungsbeispiel gemäß Figur 9, wobei jedoch in der ersten Wechselspannungsanschlussklemme 15, also wechselspannungsseitig, ein Kondensator Cᵣ angeordnet ist. Hierbei handelt es sich demnach um eine resonant geschaltete Vollbrücke.

Figur 11 entspricht weitestgehend dem Ausführungsbeispiel gemäß Figur 7, wobei jedoch der Kondensator auf der Wechselspannungsseite der Spule 26 als Resonanzkondensator angeordnet ist. Die Mittel 23 zum Ein- und Auskoppeln elektrischer Leistung gemäß Figur 11 kann somit als resonant geschaltete Halbbrücke bezeichnet werden.

Hinsichtlich der Ausführungsbeispiele 7 bis 11 lässt sich zusammenfassen, dass die Mittel zum Ein- und Auskoppeln elektrischer Leistung als Halb- oder Vollbrücke sowohl hart schaltend als auch resonant schaltend ausgeführt sein können. Die resonante Schaltung hat den Vorteil der höher erreichbaren Taktfrequenz und somit einer kleineren Größe des oder der Transformatoren zur Kopplung der Induktivitäten unterschiedlicher erfindungsgemäßer Vorrichtungen.

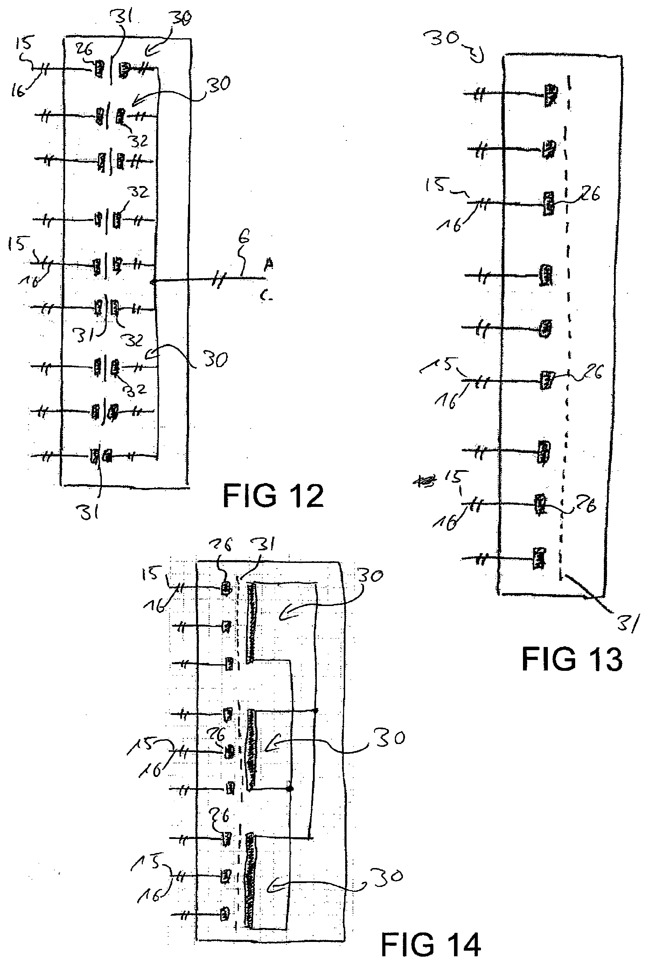

Mögliche Realisierungen solcher Transformatoren 30 sind in den Figuren 12, 13 und 14 gezeigt. Bei dem Ausführungsbeispiel gemäß Figur 12 ist eine Vielzahl von Einzeltransformatoren 30 vorgesehen. Die Primärwicklung jedes Einzeltransformators 30 wird durch eine Spule 26 der Mittel zum Ein- und Auskoppeln elektrischer Leistung 23 gebildet. Sie wird über einen Kern 31 des Transformators 30 mit einer Sekundärwicklung 32 gekoppelt. Alle Sekundärwicklungen sind über die Sammelschiene 6 miteinander verbunden.

Figur 14 zeigt ein Ausführungsbeispiel mit drei Transformatoren 30. Die Sekundärwicklungen der Transformatoren 30 sind wieder über eine Sammelschiene 6 miteinander verbunden. Allerdings sind die Sekundärwicklungen jeweils mit mehreren Induktivitäten oder Spulen 26 der Mittel zum Ein- und Auskoppeln elektrischer Leistung 23 gekoppelt. Im Gegensatz zu den Ausführungsbeispielen 12 und 14 weist der Trafo 30 gemäß Figur 13 keine Sekundärwicklungen und keine Sammelschiene 6 auf. Die Induktivitäten der Mittel zum Ein- und Auskoppeln elektrischer Leistung sind vielmehr allein über den Kern 31 des Transformators miteinander gekoppelt. Die ausgetauschten Leistungen addieren sich in diesem Fall zu null.

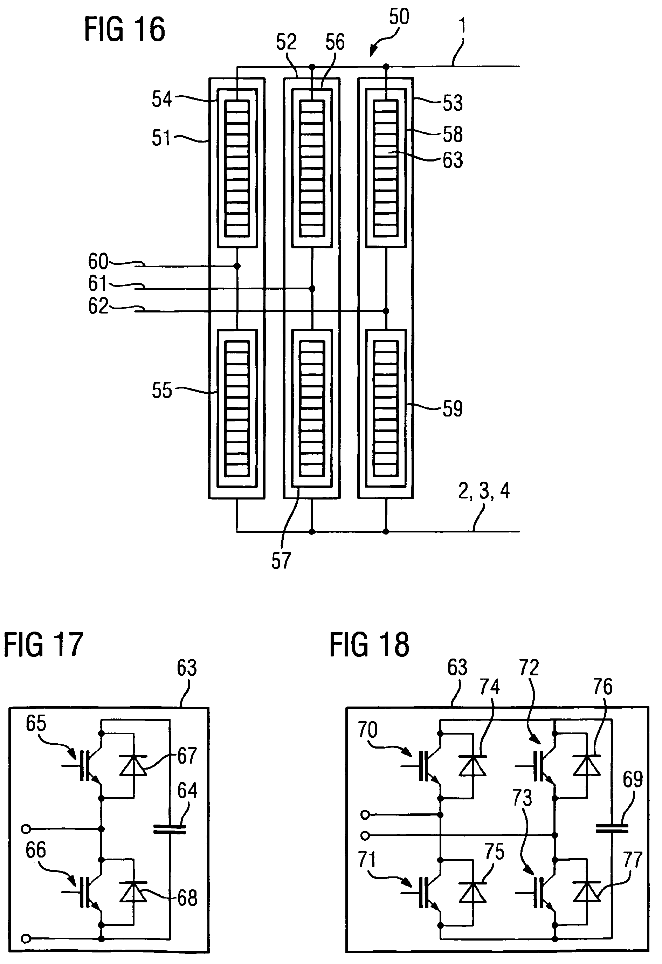

Figur 16 zeigt eine beispielhafte Realisierung einer Längsspannungsquelle in Form einer Anordnung 50, wie sie z.B. als Komponente 5a bis 5c einsetzbar ist. Die Anordnung 50 ist mit dem Gleichspannungsknoten 1 einerseits und mit einem der Abzweige 2, 3 oder 4 andererseits verbunden. Insoweit ist die Längsspannungsquelle als ein Zweipol darstellbar, der zwischen den beiden Polen 1 und 2 (bzw. 3 oder 4) einer Gleichspannung angeschlossen ist.

Bei der Anordnung 50 handelt es sich um einen modularen Umrichter mit drei Phasenmodulen 51, 52 und 53, von denen jedes zwei Phasenmodulzweige 54 und 55, 56 und 57 sowie 58 und 59 aufweist. Zwischen den jeweiligen Phasenmodulzweigen ist ein Wechselspannungsanschluss 60, 61, 62 vorgesehen.

Jeder Phasenmodulzweig 54 bis 59 weist eine Vielzahl in Reihe geschalteter Submodule 63 auf.

Das Submodul 63 kann gemäß Figur 17 als eine Halbbrückenschaltung ausgeführt sein mit einem Energiespeicher 64, der parallel zu einer Reihenschaltung angeordnet ist aus zwei Leistungshalbleiterschaltern 65, 66, zu denen jeweils eine gegensinnig angeordnete parallele Freilaufdiode 67, 68 vorgesehen ist.

Wie in Figur 18 gezeigt ist, kann das das Submodul 63 alternativ als eine Vollbrückenschaltung ausgeführt sein. In diesem Fall sind vier Leistungshalbleiterschalter 70 bis 73 vorgesehen, von denen jeweils zwei in Reihe geschaltet sind und zwei derartige Reihenschaltungen parallel zu einem Energiespeicher 69 angeordnet sind. Zu jedem der Leistungshalbleiterschalter ist eine Freilaufdiode 74 bis 77 gegensinnig parallel angeordnet.

Bei der Halbbrückenschaltung ist auf der Gleichstromseite nur eine Polarität der Spannung möglich, wohingegen die Vollbrückenschaltung beide Spannungspolaritäten erzeugen kann.

Die Wechselspannungsanschlüsse 60, 61 und 62 können mit einem Drehstromtransformator verbunden sein.

Beispielhaft ist die Schaltung gemäß Figur 16 mit drei Phasenmodulen ausgeführt. Entsprechend ist es möglich, ein einzelnes Phasenmodul oder eine beliebige Anzahl von Phasenmodulen vorzusehen. Für den Anschluss eines Transformators sind mindestens zwei Phasenmodule mit dann zwei Wechselspannungsanschlüssen vorgesehen.

Die Längsspannungsquellen 5a bis 5c können aus einer Serienschaltung von Submodulen 12 aufgebaut sein, die - wie dies beispielhaft in Figur 3 gezeigt ist- als Vierpole ausgeführt sein können.

Ergänzend sei angemerkt, dass auch die Querstromquelle 40, 40a oder 40b gemäß der Anordnung von Figur 3 ausgeführt sein kann. Alternativ kann die Querstromquelle 40, 40a oder 40b entsprechend der in Figur 16 gezeigten Anordnung ausgeführt sein.

Vorteilhaft kann die Querstromquelle mittels Halbbrückenschaltungen realisiert sein und die Längsspannungsquelle kann vorteilhaft mittels Vollbrückenschaltungen realisiert sein.

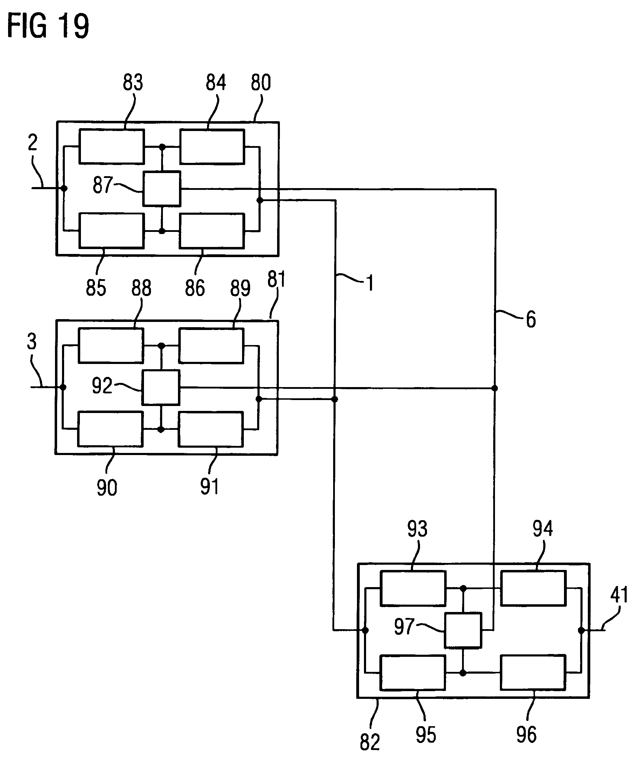

Figur 19 zeigt eine schematische Schaltungsanordnung umfassend eine Längsspannungsquelle 80 (vgl. Längsspannungsquelle 5a in Figur 1), eine Längsspannungsquelle 81 (vgl. Längsspannungsquelle 5b in Figur 1) und eine Querstromquelle 82 (vgl. Querstromquelle 40 in Figur 1).

Die Längsspannungsquellen 80, 81 und die Querstromquelle 82 haben entsprechend den Ausführungen zur Anordnung 50 einen ähnlichen Aufbau:

So umfasst die Längsspannungsquelle 80 mehrerer Phasenmodule 83 bis 86, wobei das Phasenmodul 83 mit dem Phasenmodul 84 in Reihe geschaltet ist. Weiterhin sind die Phasenmodule 85 und 86 in Reihe geschaltet. Die beiden Reihenschaltungen aus den Phasenmodulen sind zueinander parallel geschaltet, wobei ein Mittenabgriff zwischen den jeweils in Reihe geschalteten Phasenmodulen über einen Transformator 87 mit der Niederspannungssammelschiene 6 verbunden ist. Die Längsspannungsquelle 80 ist zwischen dem Abzweig 2 und dem Gleichspannungsknoten 1 angeordnet.

Diese Ausführungen gelten für die Längsspannungsquelle 81 entsprechend, die zwischen dem Abzweig 3 und dem Gleichspannungsknoten 1 angeordnet ist. Diese Längsspannungsquelle 81 umfasst Phasenmodule 88 bis 91, die entsprechend der Längsspannungsquelle 81 angeordnet sind. Ferner ist ein Transformator 92 vorgesehen, der mit der Niederspannungssammelschiene 6 verbunden ist.

Auch die Querstromquelle 82 umfasst Phasenmodule 93 bis 96, die entsprechend angeordnet sind. Ein Transformator 97 der Querstromquelle 82 ist mit den Wechselspannungsanschlüssen sowie der Niederspannungssammelschiene 6 verbunden. Die Querstromquelle 82 ist einerseits mit dem Gleichspannungsknoten 1 und andererseits mit dem Nullpunkt 41 verbunden.

Über die Niederspannungssammelschiene 6 können die Längsspannungsquellen 80, 81 und die Querstromquelle 82 Energie austauschen.

Wie bereits im Hinblick auf Figur 16 ausgeführt wurde, kann die Längsspannungsquelle 80, 81 und/oder die Querstromquelle 82 auch mehrere Phasenmodulzweige aufweisen und entsprechend auch mehrere Wechselspannungsanschlüsse bereitstellen, von denen jeweils zwei über einen Transformator gekoppelt sind.

### Bezugszeichenliste:

- 1: Gleichspannungsnetzknoten
- 2: Abzweig
- 3: Abzweig
- 4: Abzweig
- 5: Vorrichtung
- 5a-5f: Vorrichtung
- 6: Niederspannungssammelschiene
- 7: Dauerstrompfad
- 8: Abschaltstrompfad
- 9: Leistungsschalteinheit
- 10: Schalter
- 11: Längsspannungsquelle
- 12: Submodul
- 13: Anschlussklemme
- 14: Anschlussklemme
- 15: Wechselspannungsanschlussklemme
- 16: Wechselspannungsanschlussklemme
- 17: Reihenschaltung
- 18: Leistungshalbleiterschalteinheit
- 19: Leistungshalbleiterschalteinheit (z.B. IGBT)
- 20: Freilaufdiode
- 21: Reihenschaltung
- 22: Energiespeicher
- 23: Mittel zum Ein- und Auskoppeln elektrischer Leistung
- 24: Reihenschaltung
- 25: Kondensator
- 26: Spule
- 27: Induktivität
- 29: Reihenschaltung
- 30: Transformator
- 31: Kern des Transformators
- 32: Sekundärwicklung

- 40: Querstromquelle
- 40a, 40b: Querstromquelle
- 41: Nullpunkt

- 50: Anordnung
- 51-53: Phasenmodul
- 54-59: Phasenmodulzweig
- 60-62: Wechselspannungsanschluss
- 63: Submodul
- 64: Energiespeicher
- 65, 66: Leistungshalbleiterschalter
- 67, 68: Freilaufdiode
- 69: Energiespeicher
- 70-73: Leistungshalbleiterschalter
- 74-77: Freilaufdiode

- 80, 81: Längsspannungsquelle
- 82: Querstromquelle
- 83-86: Phasenmodul
- 87: Transformator
- 88-91: Phasenmodul
- 92: Transformator
- 93-96: Phasenmodul
- 97: Transformator

## Patentansprüche

1. Vorrichtung (5,5a,5b,5c) zur Lastfluss-Steuerung eines Gleichstromes in einem Abzweig (2,3,4) eines Gleichspannungsnetzknotens (1) mit einer Längsspannungsquelle (11), die Mittel (23) zum Ein- oder Auskoppeln elektrischer Leistung aufweist
**dadurch gekennzeichnet, dass**
die Mittel (23) zum Ein- und Auskoppeln elektrischer Leistung über eine Niederspannungssammelschiene mit Mitteln (23) zum Ein- und Auskoppeln elektrischer Leistung einer weiteren Vorrichtung (5,5a,5b,5c) zur Lastfluss-Steuerung gekoppelt sind, die in einem anderen Abzweig (2,3,4) des gleichen Gleichspannungsnetzknotens (1) angeordnet ist.

2. Vorrichtung nach einem der vorhergehenden Ansprüche,
**dadurch gekennzeichnet, dass** die Längsspannungsquelle über eine Querstromquelle mit einem Nullpunkt verbindbar ist.

3. Vorrichtung nach einem der vorhergehenden Ansprüche,
**dadurch gekennzeichnet, dass** die Längsspannungsquelle mindestens einen Umrichter aufweist.

4. Vorrichtung nach einem der vorhergehenden Ansprüche,
**dadurch gekennzeichnet, dass** die Längsspannungsquelle mindestens ein Phasenmodul mit mindestens zwei in Reihe geschalteten Phasenmodulzweigen aufweist, wobei ein Mittenabgriff zwischen den Phasenmodulzweigen mit einem Wechselspannungsanschluss, insbesondere mit einem Transformator, verbindbar ist.

5. Vorrichtung nach einem der vorhergehenden Ansprüche,
**dadurch gekennzeichnet, dass** die Längsspannungsquelle in Reihe mit einem mechanischen Schalter geschaltet ist und parallel zu der Längsspannungsquelle und dem mechanischen Schalter eine Leistungsschalteinheit angeordnet ist.

6. Vorrichtung (5,5a,5b,5c) nach einem der vorhergehenden Ansprüche,
**dadurch gekennzeichnet, dass** die Längsspannungsquelle (11) wenigstens ein Submodul (12) mit einem Energiespeicher (22) und einer Leistungshalbleiterschaltung (17,21) aufweist und ferner mit Mitteln (23) zum Ein- und Auskoppeln elektrischer Leistung ausgerüstet ist.

7. Vorrichtung (5, 5a, 5b, 5c) nach Anspruch 6,
**dadurch gekennzeichnet, dass** jedes Submodul (12) eine Halbbrückenschaltung aufweist.

8. Vorrichtung (5,5a,5b,5c) nach Anspruch 6,
**dadurch gekennzeichnet, dass** jedes Submodul (12) eine Vollbrückenschaltung aufweist.

9. Vorrichtung (5,5a,5b,5c) nach einem der Ansprüche 6 bis 8,
**dadurch gekennzeichnet, dass** durch die Mittel (23) zum Ein- und Auskoppeln elektrischer Leistung eine Wechselspannung im Niederspannungsbereich erzeugbar ist.

10. Vorrichtung (5,5a,5b,5c) nach Anspruch 9,
**dadurch gekennzeichnet, dass** die Mittel (23) zum Ein- und Auskoppeln elektrischer Leistung wenigstens eine dem Energiespeicher (22) parallel geschaltete Reihenschaltung (24) aus zwei ein- und abschaltbaren Leistungshalbleiterschaltern (19) und eine Spule (26) aufweisen.

11. Vorrichtung (5,5a,5b,5c) nach Anspruch 10,
**dadurch gekennzeichnet, dass** die Spule (26) induktiv mit einer Spule (26) einer Längsspannungsquelle (11) einer weiteren Vorrichtung (5,5a,5b,5c) nach Anspruch 8 gekoppelt ist, die in einem anderen Abzweig (2,3,4) des gleichen Gleichspannungsnetzknotens (1) angeordnet ist.

## Claims

1. Apparatus (5, 5a, 5b, 5c) for load flow control of a direct current in a branch (2, 3, 4) of a DC voltage network node (1) comprising a longitudinal voltage source (11), which has means (23) for coupling in or coupling out electric power,
**characterized in that**
the means (23) for coupling in and coupling out electric power are coupled via a low-voltage busbar to means (23) for coupling in and coupling out electric power of a further apparatus (5, 5a, 5b, 5c) for load flow control, which further apparatus is arranged in another branch (2, 3, 4) of the same DC voltage network node (1).

2. Apparatus according to one of the preceding claims,
**characterized in that** the longitudinal voltage source is connectable to a neutral point via a transverse current source.

3. Apparatus according to one of the preceding claims,
**characterized in that** the longitudinal voltage source has at least one converter.

4. Apparatus according to one of the preceding claims,
**characterized in that** the longitudinal voltage source has at least one phase module comprising at least two phase module branches connected in series, wherein a center tap between the phase module branches is connectable to an AC voltage connection, in particular to a transformer.

5. Apparatus according to one of the preceding claims,
**characterized in that** the longitudinal voltage source is connected in series with a mechanical switch, and a power switching unit is arranged in parallel with the longitudinal voltage source and the mechanical switch.

6. Apparatus (5, 5a, 5b, 5c) according to one of the preceding claims,
**characterized in that**
the longitudinal voltage source (11) has at least one submodule (12) comprising an energy store (22) and a power semiconductor circuit (17, 21) and is further provided with means (23) for coupling in and coupling out electric power.

7. Apparatus (5, 5a, 5b, 5c) according to Claim 6,
**characterized in that**
each submodule (12) has a half-bridge circuit.

8. Apparatus (5, 5a, 5b, 5c) according to Claim 6,
**characterized in that**
each submodule (12) has a full-bridge circuit.

9. Apparatus (5, 5a, 5b, 5c) according to one of Claims 6 to 8,
**characterized in that**
an AC voltage in the low-voltage range can be generated by the means (23) for coupling in and coupling out electric power.

10. Apparatus (5, 5a, 5b, 5c) according to Claim 9,
**characterized in that**
the means (23) for coupling in and coupling out electric power have at least one series circuit (24) comprising two power semiconductor switches (19) which can be switched on and off and a coil (26), said series circuit being connected in parallel with the energy store (22).

11. Apparatus (5, 5a, 5b, 5c) according to Claim 10,
**characterized in that**
the coil (26) is inductively coupled to a coil (26) of a longitudinal voltage source (11) of a further apparatus (5, 5a, 5b, 5c) according to Claim 8, which further apparatus is arranged in another branch (2, 3, 4) of the same DC voltage network node (1).

## Revendications

1. Dispositif ( 5, 5a, 5b, 5c ) de commande de flux de charge d'un courant continu dans une dérivation ( 2, 3, 4 ) d'un noeud ( 1 ) de réseau à tension continue, ayant une source ( 11 ) de tension montée en série, qui a des moyens ( 23 ) de couplage ou de découplage de puissance électrique,
**caractérisé en ce que**
les moyens ( 23 ) de couplage et de découplage de puissance électrique, sont couplés, par un rail collecteur de basse tension, aux moyens ( 23 ) de couplage et de découplage de puissance électrique d'un autre dispositif ( 5, 5a, 5b, 5c ) de commande de flux de charge, lequel est monté dans une autre dérivation ( 2, 3, 4 ) du même noeud ( 1 ) de réseau à tension continue.

2. Dispositif suivant l'une des revendications précédentes,
**caractérisé en ce que**
la source de tension montée en série peut être reliée à un point zéro par une source de courant transversale.

3. Dispositif suivant l'une des revendications précédentes,
**caractérisé en ce que** la source de tension montée en série comporte au moins un convertisseur.

4. Dispositif suivant l'une des revendications précédentes,
**caractérisé en ce que** la source de tension montée en série comporte au moins un module de phase ayant au moins deux branches de module de phase montées en série, une prise médiane entre les branches de module de phase pouvant être reliée à une borne de tension alternative, notamment à un transformateur.

5. Dispositif suivant l'une des revendications précédentes,
**caractérisé en ce que** la source de tension montée en série est montée en série avec un interrupteur mécanique et une unité de disjonction est montée en parallèle à la source de tension montée en série et à l'interrupteur mécanique.

6. Dispositif ( 5, 5a, 5b, 5c ) suivant l'une des revendications précédentes,
**caractérisé en ce que** la source ( 11 ) de tension montée en série comporte au moins un sous-module ( 12 ) ayant un accumulateur ( 22 ) d'énergie et un circuit ( 17, 21 ) à semi-conducteur de puissance et est équipée en outre de moyens ( 23 ) de couplage et de découplage de puissance électrique.

7. Dispositif ( 5, 5a, 5b, 5c ) suivant la revendication 6,
**caractérisé en ce que**
chaque sous-module ( 12 ) comporte un circuit en demi-pont.

8. Dispositif ( 5, 5a, 5b, 5c ) suivant la revendication 6,
**caractérisé en ce que**
chaque sous-module ( 12 ) comporte un circuit en pont complet.

9. Dispositif ( 5, 5a, 5b, 5c ) suivant l'une des revendications 6 à 8,
**caractérisé en ce qu'**
une tension alternative dans le domaine de la basse tension peut être obtenue par les moyens ( 23 ) de couplage et de découplage de puissance électrique.

10. Dispositif ( 5, 5a, 5b, 5c ) suivant la revendication 9,
**caractérisé en ce que**
les moyens ( 23 ) de couplage et de découplage de puissance électrique comporte au moins un circuit ( 24 ) série, monté en parallèle à l'accumulateur ( 22 ) d'énergie et composé de deux interrupteurs ( 19 ) à semi-conducteur de puissance, pouvant être fermés et ouverts, et une bobine ( 26 ).

11. Dispositif ( 5, 5a, 5b, 5c ) suivant la revendication 10,
**caractérisé en ce que**
la bobine ( 26 ) est couplée à une bobine ( 26 ) d'une source ( 11 ) de tension montée en série d'un autre dispositif ( 5, 5a, 5b, 5c ) suivant la revendication 8 qui est monté dans une autre dérivation ( 2, 3, 4 ) du même noeud ( 1 ) de réseau à tension continue.
